# EUROPEAN PATENT APPLICATION

(11) **EP 1 028 576 A2**
(43) Date of publication of application: **16.08.2000**
(21) Application number: 00103003.0
(22) Date of filing: 14.02.2000
(51) Int. Cl.: H04M 1/274, H04M 1/725

(54) **Message transmission method for digital portable terminal**

(30) Priority: 13.02.1999 KR 9905219
(71) Applicant: SAMSUNG ELECTRONICS CO., LTD., Suwon-City, Kyungki-do (KR)
(72) Inventor: Shim, Seng-Wook, Suwon-shi, Kyonggi-do (KR); Jun, Ki-Sang, Yongin-shi, Kyonggi-do (KR)
(74) Representative: Grünecker, Kinkeldey, Stockmair & Schwanhäusser Anwaltssozietät

(57) **Abstract**

A message transmission method for a digital portable terminal is described. In the message transmission method, user-selected telephone numbers are stored, a telephone number detection mode is set when a message is completely written in a message transmission mode, an intended telephone number to be dialed is detected in the telephone number detection mode upon user request, and the written message is transmitted to the detected telephone number.

## Description

### PRIORITY

This application claims priority to an application entitled "Message Transmission Method for Digital Portable Terminal" filed in the Korean Industrial Property Office on February 13, 1999 and assigned Serial No. 99-5219, the contents of which are hereby incorporated by reference.

### BACKGROUND OF THE INVENTION

### 1. Field of the Invention

The present invention relates generally to a message transmission method for a digital portable terminal, and in particular, to a message transmission method for a digital portable terminal, in which an intended called telephone number is detected among pre-stored telephone numbers and a message is transmitted to the detected called number.

### 2. Description of the Related Art

In general, a short message service (SMS) allows a subscriber of a digital portable terminal to transmit/receive a message to/from the other party. To implement the SMS function, a system to which the digital portable terminal is registered should support the SMS and the terminal should be able to receive, edit, and transmit a message. For message transmission with the SMS, a user enters the dial number of a called party resorting to his memory or perception in any other way. This message transmission method has shortcomings. For example, the user may forget the called number after he completes a message. The called number is pre-stored in the terminal according to a phone book function. Then, he stores the message, completes a message writing mode, detects the called number with the help of the phone book function, re-sets the message writing mode, retrieves the stored message, and enters the detected number. That is, the called number cannot be directly detected from the phone book and thus the user should enter the called number manually with the help of his memory in a message write mode in the conventional digital potable terminal, suffering great inconvenience.

### SUMMARY OF THE INVENTION

It is, therefore, an object of the present invention to provide a message transmission method for a digital portable terminal, which allows a user to selectively enter a called number by scanning stored telephone numbers in a message writing sub-mode and rapidly transmit the message to the selected number.

It is another object of the present invention to provide a message transmission method for a digital portable terminal, which simultaneously operates a message transmission mode and a telephone directory search mode operated in a typical digital portable terminal so that the telephone directory search mode can be performed to detect a necessary called number in the message transmission mode.

These and other objects can be achieved by providing a message transmission method for a digital portable terminal is described. In the message transmission method, user-selected telephone numbers are stored, a telephone number detection mode is set when a message is completely written in a message transmission mode, an intended telephone number to be dialed is detected in the telephone number detection mode upon user request, and the written message is transmitted to the detected telephone number.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram of a digital portable terminal for message transmission, to which the present invention is applied;
FIG. 2 is a flowchart illustrating a message transmission method in the digital portable terminal according to a preferred embodiment of the present invention; and
FIG. 3 illustrates messages on a display of the digital portable terminal in a message transmission mode according to the preferred embodiment of the present invention.

### DETAILED DESCRIPTION OF THE PREFERRED EMBODIMENT

A preferred embodiment of the present invention will be described hereinbelow with reference to the accompanying drawings. In the following description, well-known functions or constructions are not described in detail since they would obscure the invention in unnecessary detail.

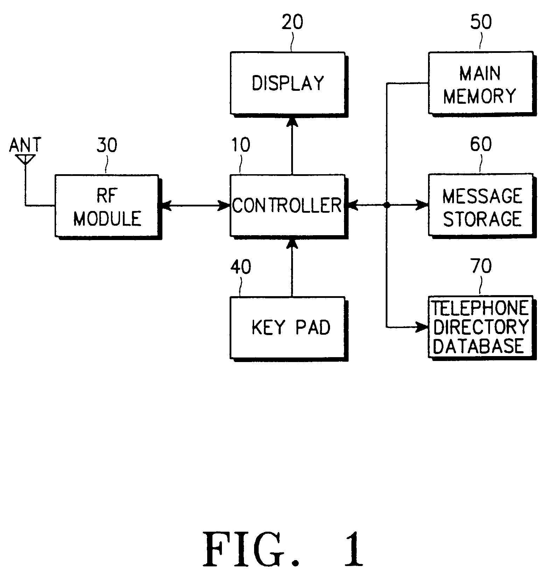

FIG. 1 is a block diagram of a digital portable terminal to which the present invention is applied. While requisite devices like a DTMF (Dual-Tone Multifrequency Pulsing) processor and a VOCODER are not shown due to lack of direct connection to the features of the present invention, they are provided to a real digital portable terminal to implement the present invention.

Referring to FIG. 1, a controller 10 provides overall control to the digital portable terminal. The controller 10 controls detection and entry of a telephone number in a phone book function when a message is written and transmitted. The controller 10 is usually a one-chip microprocessor. A display 20 is a user interface to display the whole status of the digital portable terminal, input digits and characters, a written message, and a detected telephone number to a user. The display 20 is typically an LCD (Liquid Crystal Display). In accordance with an embodiment of the present invention, the display 20 further displays a message written under the control of the controller 10 and a searched telephone number list by a predetermined size in a predetermined order. An RF (radio frequency) module 30 processes reception/transmission of an RF signal between the digital portable terminal and a base station to which the terminal is registered. Specifically, the RF module 30 converts an RF signal to an IF (Intermediate Frequency) signal, the IF signal to a baseband signal, and the baseband signal to a digital signal when receiving a signal. The operation is reversely done when a signal is to be transmitted. A call is established, a written message is transmitted, and a signal is received wirelessly by the RF module 30. A key pad 40 is a user information input means including a plurality of digit keys and function keys, for feeding corresponding key data to the controller 10 upon input of a key. The user sets an intended function and operation by entering a key in the key pad 40. According to the embodiment of the present invention, message writing and telephone number detection can be manipulated by the user through the key pad 40. A main memory 50 includes a ROM for storing encoded programs for performing the overall operation of the digital portable phone, message writing and transmission, and telephone directory scanning, and a RAM for temporarily storing data generated during executing programs. The RAM is used generally as a buffer to temporarily store a written message and a detected telephone number before they are displayed. The ROM can be a flash ROM or an EEPROM depending on data storage and erasure characteristics. A message storage 60 is electrically programmable and stores option data of the programs and received and written messages. The message storage 60 is generally an EEPROM for storing received and written messages in the form of encoded data. The data is read and displayed in a predetermined form under the control of the controller 10, upon user request. The data can be transmitted upon a message transmission request. A telephone directory database 70 stores input telephone numbers in an address order, in a name order, or in any other order according to a phone book function provided to the portable terminal. The telephone directory database 70 is typically formulated in an EEPROM in the digital portable terminal.

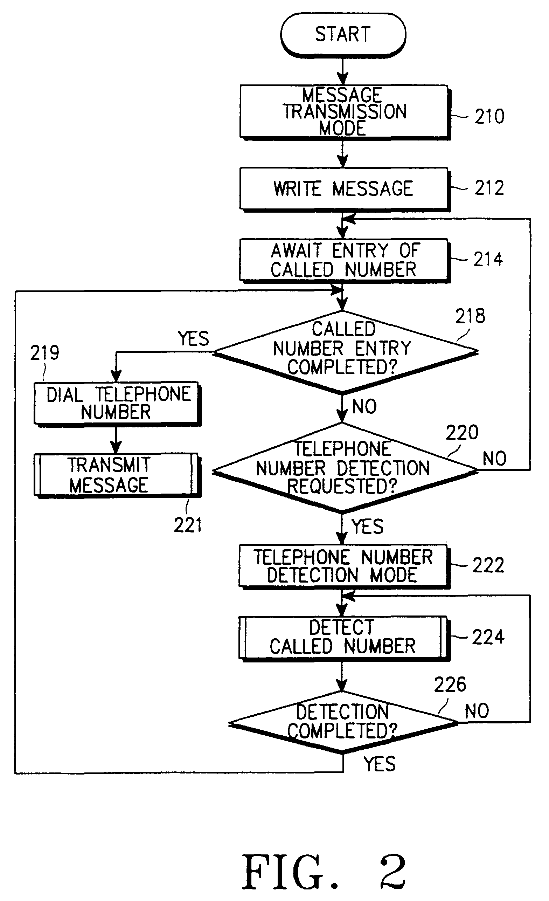

FIG. 2 is a flowchart illustrating a message transmission method for the digital portable terminal shown in FIG. 1 according to a preferred embodiment of the present invention. Referring to FIG. 2, upon user request, a message transmission mode is set in step 210. In step 212, a user writes a message to be transmitted in a message writing sub-mode. After the message is completely written and the message completion is confirmed, entry of a called telephone number, for which the written message is destined, is awaited in step 214. It is determined whether the called number has been entered completely in step 218. If the called number is completely entered, the number is dialed in step 219 and the message written in step 212 is transmitted in step 221. Meanwhile, if the called number is not entered in step 218, it is determined whether a telephone number detection request has been entered in step 220. In this case, the user does not enter digit keys representing a telephone number but a corresponding function key. Upon a telephone number detection request from the user in step 220, a telephone number detection mode is set in step 222. The telephone detection mode is performed with the help of a telephone directory search sub-function in a phone book function provided to the digital portable terminal. That is, the message writing and the telephone number detection concurrently occur by multi-tasking. In step 224, stored telephone numbers are scanned and one of them is selected. It is determined whether the telephone numbers are completely scanned in step 226. Then, the selected telephone number is dialed and the message is transmitted to the dialed number in steps 219 and 221.

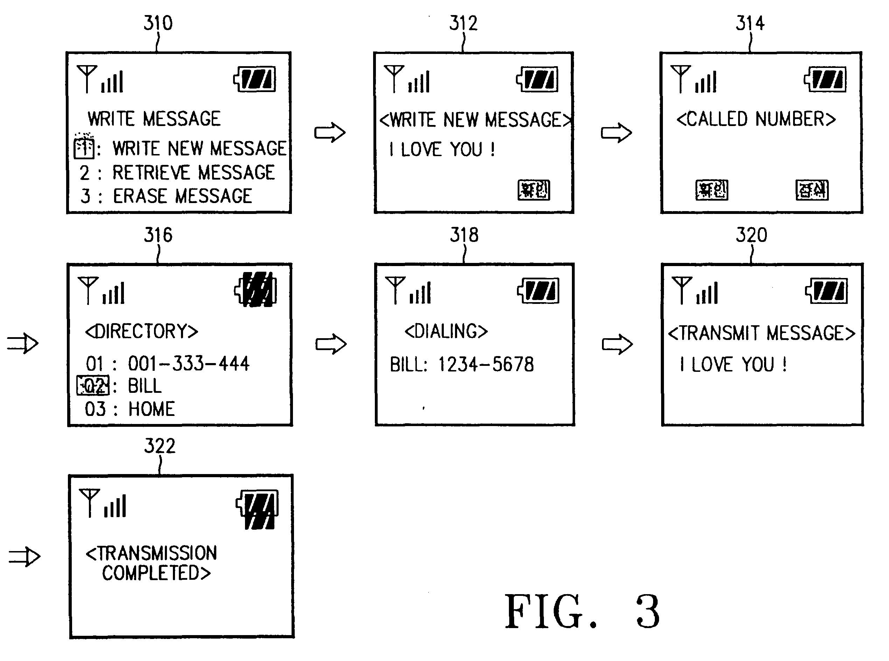

FIG. 3 illustrates messages displayed in the message transmission mode in the digital portable terminal according to the preferred embodiment of the present invention. The messages are displayed on the display of the digital portable terminal according to the operational flow of FIG. 2. Referring to FIGs. 2 and 3, the user selects the first option "write new sentence" on a display 310 after step 210. A display 312 illustrates a message "I love you!" written by the user in step 212. In step 214, entry of a called number is awaited as indicated by 314. Instead of an intended called number, the user enters a key indicating "detect". As a result of steps 222 and 224, the telephone directory search function is being implemented as indicated by 316. Upon user selection of "02: Bill", a display 318 notifies that the telephone number of Bill is being dialed in step 219. Transmission of the written message to the dialed number is informed by a display 320 in step 221. A completed message transmission is notified by a display 322 after step 221.

As described above, the message transmission mode according to the present invention allows a user to selectively enter the dial number of a called party by searching pre-stored telephone numbers in a message writing sub-mode of a message transmission mode and transmit a written message to the selected number. In addition, the user convenience is increased by operating the message transmission mode and a telephone detection mode provided to a typical portable terminal, so that the telephone detection mode can be implemented to detect a telephone number to be dialed in the message transmission mode.

## Claims

1. A message transmission method for a digital portable terminal having a telephone directory search function for searching pre-stored telephone numbers upon user request, comprising the steps of:
writing a message in a message writing mode by a user;
implementing the telephone directory search function when the dial number of a called party is to be entered;
detecting the called number by the telephone directory function upon user request; and
transmitting the written message to the detected telephone number.

2. The message transmission method of claim 1, further comprising the steps of transmitting the written message to a telephone number if the telephone number is manually entered by the user when the called number is to be entered.

3. A message transmission method for a digital portable terminal, comprising the steps of:
storing user-selected telephone numbers;
entering a telephone number detection mode when a message is completely written in a message transmission mode;
detecting an intended telephone number to be dialed in the telephone number detection mode upon user request; and
transmitting the written message to the detected telephone number

4. A message transmission method for a digital portable terminal having a phone book function, comprising the steps of:
entering a message transmission mode upon user request and writing a message in the message transmission mode;
requesting got entry of the dial number of a called party if the message is completely written;
detecting the called number by implementing the phone book function upon a telephone number detection request; and
transmitting the written message to the detected called number

5. A message transmission method for a digital portable terminal, comprising the steps of:
entering a message writing mode upon user request and writing a message in the message writing mode;
entering a called number input mode if the message is completely written;
entering a telephone directory searching mode upon a telephone number detection request in the called number input mode and detecting a called number by searching stored telephone numbers; and
transmitting the written message to the detected called number.

6. A message transmission method for a digital portable terminal having a phone book function, comprising the steps of:
requesting a called number after writing the message completely during a message transmission mode in response to the user request:
entering a telephone number detection mode by implementing the phone book function if a given telephone number detection is inputted in accordance with request of the called number:
upon selection of the telephone number in accordance with telephone number detection during the telephone number detection mode, inputting the selected telephone number as the called number; and
transmitting the written message to the inputted called number.

7. A message transmission method for a mobile phone having a telephone directory search function for searching pre-stored telephone numbers upon user request, said method steps of:
editing a message in a message writing mode by a user;
offering to the user the telephone directory search function when the dial number of a called party is to be entered;
detecting the called number by means of the telephone directory function upon an indication by the user to use the directory function and an indication which number is to be search for, and
transmitting the message to the party assigned to the detected telephone number.

8. Mobile phone comprising:
― telephone number directory means for storing frequently used telephone numbers,
― message editing means for enabling the editing and storing of messages for sending via said mobile phone,
― user query means for offering to the user to add a destination telephone number for a message to be sent by use of a telephone directory search function,
― directory search function means for detecting a desired telephone number among the telephone numbers stored in said telephone number directory means upon a respective user indication for said service and an indication with respect to the desired telephone number, and
― transmitting means for transmitting said message to the party assigned to the detected telephone number.
